# EUROPEAN PATENT APPLICATION

(11) **EP 1 755 092 A1**
(43) Date of publication of application: **21.02.2007**
(21) Application number: 05291644.2
(22) Date of filing: 01.08.2005
(51) Int. Cl.: G07F 7/10

(54) **Manufacturing machine and method for programming portable devices**

(71) Applicant: Axalto SA, 92120 Montrouge (FR)
(72) Inventor: Contamin, Bruno, c/o Axalto SA, IPD, 92120 Montrouge (FR); Leibenguth, Joseph, c/o Axalto SA, IPD, 92120 Montrouge (FR)
(74) Representative: Cour, Pierre

(57) **Abstract**

This invention describes a way to broadcast the data to be loaded simultaneously from only one reader to at least 2 cards, and more likely to a big number of cards, for example 500 cards. The loading time of pre-personalization step is to be divided by the number of cards loaded simultaneously to have the time spent for the loading per card. A manufacturing machine for loading data into portable devices comprises processing means 1 to 4 for preparing and transforming data to load into portable devices, and an antenna 5 for transforming the electric signal into an electromagnetic radiation in a loading area capable of receiving at least two portable devices 100. At least two portable devices are placed into a single loading area. The data to load are transformed into an electromagnetic radiation. The data are sent simultaneously to at least two portable devices.

## Description

### Field of the invention

The invention relates to the manufacturing of portable devices like smart cards. More particularly, the invention relates to the programming of smart cards.

### State of the art

There are many invention describing systems and application using a portable device that communicates with a reader. In most of them, the portable device is a smart card. The portable object containing an electronic memory can be access cards, banking cards, SIM cards....

A smart card generally comprises an Integrated Circuit (IC) embedded in a plastic card. The IC could be a microcontroller including a memory. The memory comprises program instructions common to a group of cards and also data that are specific to each card. The memory is an EEPROM or a Flash Memory that enables the memorization of program instructions and data without autonomous power supply. Some cards can even implement several means of communication, using the same or different physical interfaces.

At the end of manufacturing, two kinds of data are contained in the non-volatile memory of a smart card. A first kind of data is common to a set of cards. This first kind of data may comprise some programs dedicated to the use of the card, for example banking or cryptographic programs, some default setting data or other data specific to the application. A second kind of data is different for each card. The second kind of data may comprise serial number(s), secret key(s), PIN code, personal information of the card user, or any information specific to each newly manufactured card. The first kind of data is much more important in size than the second kind of data.

In the manufacturing process, the loading of the data can be made in two steps, called pre-personalization step and personalization step. The pre-personalization step corresponds to the loading of the first kind of data and may correspond to the loading of up to 256 kilobytes. The personalization step corresponds to the loading of individual data in each card, the amount of data is generally less important. These two steps can be made in a same manufacture or in two distinct places.

Currently, the writing of data could be made by mean of electrical contacts or by mean of an antenna of the card depending of the available communication means. But whatever the kind of data, the loading is always made card by card. The loading of the pre-personalization data may take a long time, for example 50 seconds. The loading of individual data is shorter in time and takes few seconds. For minimizing the loading time in the manufacturing process, it is known to do it in parallel on several cards. Such a method needs to multiply the number of machines that must work in parallel or the complexity of a machine that comprises several card readers.

The man of the art search to find new solutions for reducing the time spent to the loading of data and in particular the loading time of pre-personalization data.

### Summary of the invention

This invention describes a way to broadcast the data to be loaded simultaneously from only one reader to at least 2 cards, and more likely to a big number of cards, for example 500 cards. The loading time of pre-personalization step is to be divided by the number of cards loaded simultaneously to have the time spent for the loading per card. The use of a single-reader machine for a plurality of cards is easier to use in the manufacturing process than a plurality of reader in parallel.

According to a first aspect, the invention is manufacturing machine for loading data into portable devices. Said machine comprises processing means and an antenna. The processing means prepare data to load into portable devices and transform said data in an electric signal carrying said data. The antenna is connected to the processing means. The antenna transforms the electric signal into an electromagnetic radiation in a loading area. The loading area is capable of receiving at least two portable devices.

Preferentially, the machine further comprises an electromagnetic shield of Faraday type surrounding the antenna and the loading area. The portable devices are smart cards. The machine comprises only one-way communication means for sending commands and information from said machine to said portable devices.

According to a second aspect, the invention is a method for loading data from a reader into a memory of portable devices. The method comprises step of placing at least two portable devices into a single loading area; a step of preparing the data to load into portable devices and transforming said data into an electromagnetic radiation; and a step of sending simultaneously to the at least two portable devices the electromagnetic radiation for loading simultaneously the data in said portable devices.

Preferentially, the step of preparing the data comprises a step of forming successive blocks of data that can be load individually block by block. Before the sending of each block of data, the reader switches off and then switches on the field that supplies power to the cards. The portable devices are smart cards.

According to different embodiments, several commands can be used in the method. Before the sending of data to the portable devices, the reader sends a command for placing said portable devices in a broadcasting mode in which all portable devices are simultaneously activated for receiving commands and data. After the downloading of all data, a command is sent for triggering an auto-test in each card on the downloaded data, said command placing all erroneous cards in a functioning mode different from the functioning mode of the correctly downloaded cards. The command for triggering the auto test is launched in the broadcasting mode and the erroneous cards returns in a non-broadcasting mode for being individually selected. After the downloading of all data and eventually after the testing of data, a non-volatile flag of the device is set for definitely disabling the commands related to the broadcasted mode.

According to a third aspect, the invention is a smart card supporting a wireless communication protocol. Said smart card supports the commands previously defined for implementing the downloading method.

### Brief description of the drawings

For a better understanding of the invention and its advantage, reference is made to the accompanying drawings wherein:
the figures 1 to 3 show several embodiments of a manufacturing machine according to the invention,
the figure 4 shows a state diagram of a smart card according ISO 14443-3, and
the figures 5-7 illustrate state diagrams of a smart card according different embodiments of the invention.

### Detailed description of the invention

Contact-less cards commonly implement a protocol following the ISO 14443. The physical layer of this protocol is for example described in the ISO 14443-2. Such a protocol is supported by the hardware interface of communication included in the IC of a card.

This protocol contains an anti-collusion mechanism, so that, when more than one card are presented simultaneously in front of the reader, only one card can communicate with the reader at the same time. This anti-collusion mechanism, well known by the man skilled in the art, takes place at the beginning of the communication with the reader and allocates a CID (Card Identifier) to each card presented during the initialization phase of the protocol. It is therefore very difficult, with this protocol, to send a same message to several cards at the same time.

Also, according to this protocol, the cards provide a lot of information to the reader, like the baud rate supported by the card, or the protocol supported by the card. In a production environment, it seems not necessary for the reader to get all these information, since the design of the card is well known by the technician who programs the readers.

Nevertheless, the invention is based on protocol ISO 14443 with some small modifications, and describes a way to broadcast the data to be loaded from only one reader to at least 2 cards, and more likely to a big number of cards, for example 500 cards. The present specification is made in relation to smart cards but the same invention could be applied to any kind of equivalent portable device, i.e. a device embedding and IC comprising communication means and at least one electrically programmable memory, without autonomous power supply. The invention is related to smart cards or portable devices having at least a wireless communication means in conformity with protocol ISO 14443 but may also concern devices that can include different additional communication means with or without contact.

On the point of view of the reader, some modifications are necessary for connecting it with a large quantity of cards. First, it is necessary to amplify the signal coming from the reader through an amplifier in order to provide a more powerful signal to the antenna. This amplifier can be a one-way amplifier that doesn't allow any more the transmission of signal from the cards to the reader. Therefore, the communication is done in a broadcast mode.

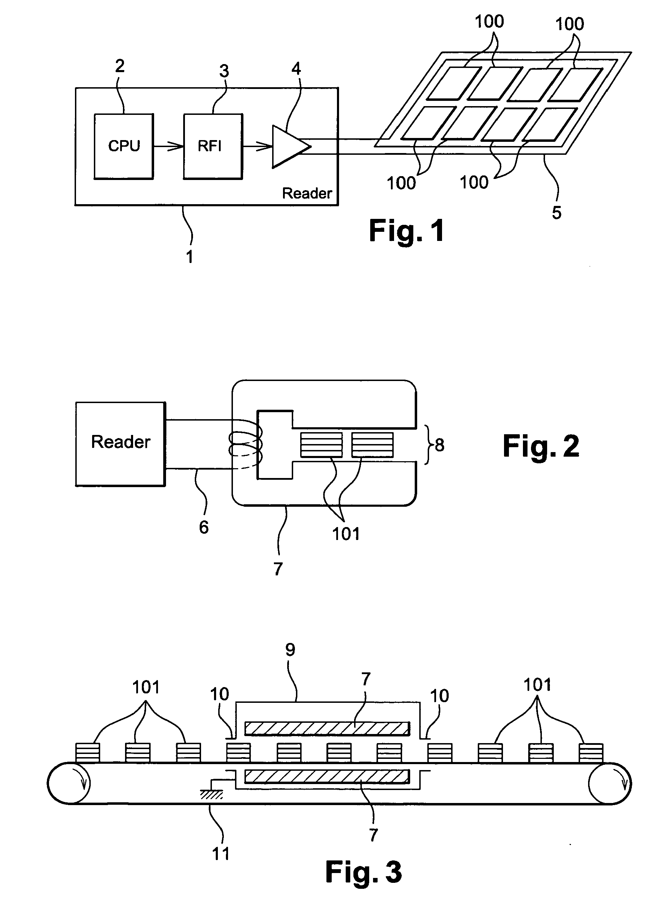

The figure 1 illustrates a first embodiment of a reader 1 according to the invention. The reader 1 comprises a Central Processing Unit (CPU) 2 coupled to a Radio Frequency Interface (RFI) 3, like a reader of prior art. But the reader 1 further comprises a power amplifier 4 connected to a large flat coil 5 forming an antenna. The section surface defined inside the flat coil 5 constitutes a loading area wherein a plurality of cards 100 can take place simultaneously. The number of cards depends of the size of the loading area but according to the invention the number of cards is at least equal to two.

The sizing of the amplifier 4 and the coil 5 is made for providing an electromagnetic field for supplying all the cards placed in the loading area. The power of the reader can exceed the minimum power defined in the ISO standard without departing from said standard. Different improvements are possible. For concentrating the field of the coil 5, it is possible to add a core.

In figure 2, the flat coil 5 is replaced by the combination of a coil 6 having a core 7 with an air-gap 8. The coil 6 is not necessary a flat coil and may be also constituted with several coils placed around the same core. The field in the air-gap 8 defines a volume corresponding to the loading area and it is possible to place smart cards in stacks 101, which increases the numbers of cards loaded simultaneously.

In a variant, the cards of a same stack are slightly shifted from one to each other. This variant is made for enabling each card to capture a different part of the magnetic field. This variant can be more efficient with some reader antenna.

The use of a high radiation antenna for addressing several cards simultaneously may create interferences for other machine in a manufacture. A drawback of using high power antenna for a reader is that the radiation field can be detected from a long distance by a third party, and may disclose confidential data. For these two reasons, the antennas may be shielded as shown on figure 3. The coil 6 and the core 7 are placed in a conductive chamber 9 forming a Faraday cage linked to the ground for blocking the radiation. Preferentially, the chamber 9 comprises apertures 10 enabling the passage of the stacks 101 of smart cards carried on a conveyor band 11 of an assembly line. The number of cards in the loading area could be very important, for example 50 stacks of ten cards corresponding to 500 cards loaded simultaneously.

Other alternative embodiments are possible. In the invention, a single signal is used for loading simultaneously a plurality of cards. For sizing reasons, it is possible to use an array of antennas instead of a single antenna, said array can be considered as an equivalent antenna having an equivalent loading area composed by the union of the different loading area corresponding to the antennas of said array. The different antennas could be driven by several amplifiers constituting an equivalent power amplifier, said several amplifiers being driven by a same signal coming from the RFI 3

The data could be broadcasted simultaneously to all cards in a single packet of data. But considering that cards are moving during the broadcasting, the start of the broadcasting can occur before that a card is in the loading area. This problem is easily overcome by an appropriate sizing of the loading area but necessitates an over-sizing of said area. For minimizing the over-sizing, it is preferred to load the data by blocks of data. The data to load in the memory are divided in n blocks of data, n being a positive integer. The over-sizing is minimized to a length corresponding to the broadcasting of only one block of data. In thus, with a broadcasting of data by blocks, an error transmission during the loading of one block does not affect the loading of the next block of data. If the broadcasting is made twice for each block, the probability of having twice an error for a same block is minimized. Preferentially, all the data are broadcasted twice to each card during its presence in the loading area.

Another benefit of the broadcasting by blocks of data is that a card may support several exchange protocols and is not necessarily positioned on the good protocol. The receiving of a radio frequency message that does not comply to the selected protocol of the card, changes the receiving protocol of the cards. Several block transmissions may be used for the selection of the good protocol without causing an important increasing of the time needed for the loading of data.

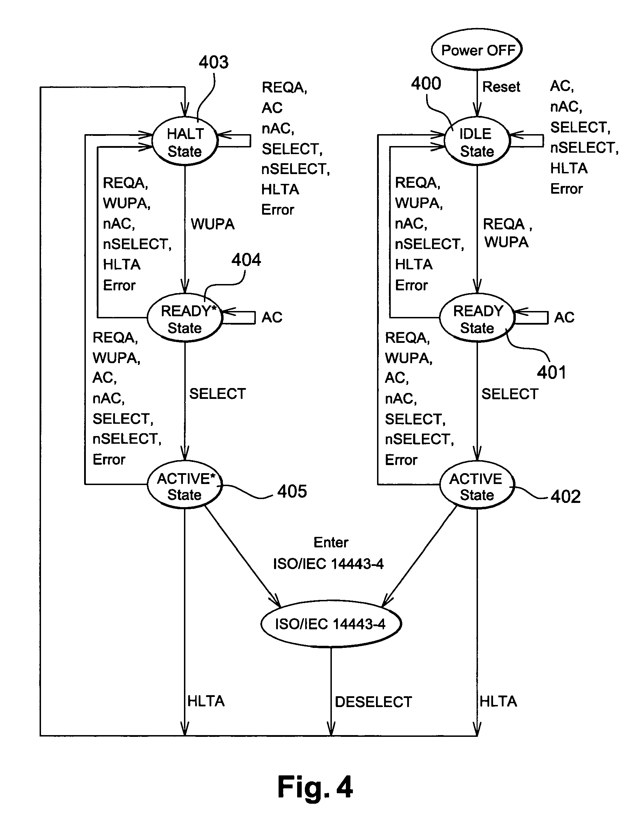

Now it is explained the modifications to do in the smart card. Before, it is necessary to detail the ISO protocol 14443. The part numbered ISO 14443-3. defines the activation of a card. It is a preliminary step before a communication wherein the cards are individually selected. The figure 4 show a state diagram of a card as indicated in the protocol for a card of type A.

A card of type A working according to the ISO 14443 Standard goes into an Idle state 400 at power on according to this standard. Still according to this standard, the card in this state can receive some commands defined by the standard. The figure 4 defines some states that are implemented on the card of the state of the art supporting the protocol ISO 14443. In the Idle state 400, some commands can be received by the card. As an example, "AC", "nAC", "SELECT", "nSELECT", "HTLA" are some commands that can be receive by the card in this Idle state 400 without changing its state. Error designates an erroneous command. "REQA" and "WUPA" are some commands that can change the state of the card from this Idle state into a Ready state 401. A command Select can then put the card into an Active state 402 wherein other commands according to the part 14443-4 can be used. For details on the different commands, the man of the art may have a look to the standards.

A command Deselect can deactivate the card and put it in a Halt state 403, which is a standby state. A WUPA command may put the card in a Ready state 404 in which the Select command can activate the card and put it in the Active state 405 wherein commands according to part 14443-4 can be received. For changing the state on the figure 4, only one card can be addressed according to ISO 14443-3 protocol and it is possible to put in an Active state 402 or 405 only a reduced number of cards, and only card by card with a different CID for each card.

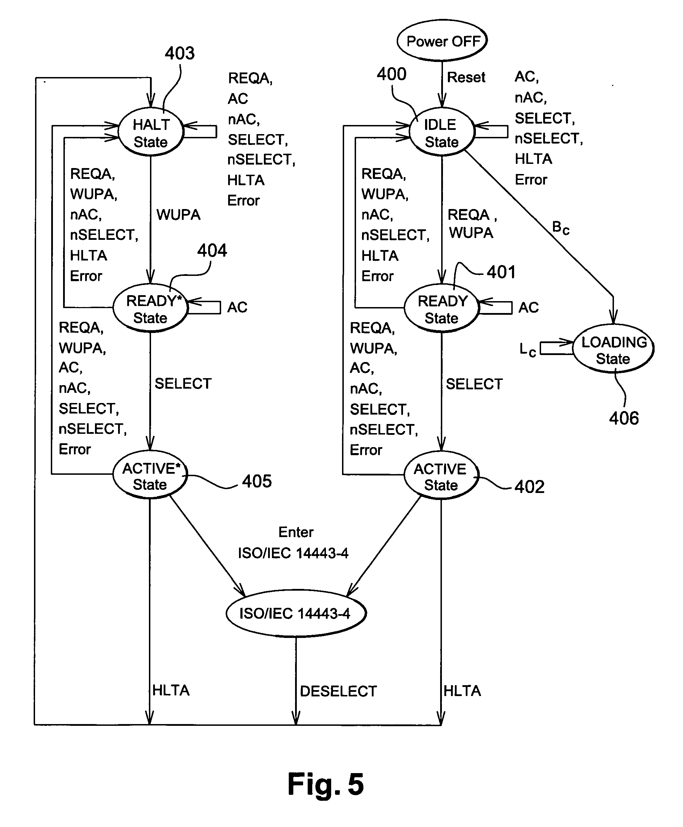

According to a first embodiment of the invention, an additional state is added. This additional state is shown on figure 5 and it is call the Loading state 406. A command is added to the commands set that can be run on the card in Idle state 400, and that put the card in the Loading state 406. The added command is for example called Bc command. This Bc command is of course supported by the protocol, which reserves some command words to proprietary use. Since the first byte of the command Bc is not the same as the first byte of the other commands that can be sent in the Idle State, there is no confusion with the other standardized commands.

For type A cards of the ISO 14443, the Bc command can be formatted as below:
Byte 1: 0x40
Byte 2: 0x01

These bytes are transmitted, for example, using the frames described in 14443-3. These bytes are sent respecting the same baud rate and guard times as the REQA command (request command) defined in 14443-3.

When the card receives this command, the card sets some parameters of the communication automatically. For this, no message is needed from the card: Since the reader is dedicated to the production of this card, the people who program the reader have the knowledge of the loader program implemented in the card and the reader can be set specifically for this card. For example, the baud rate can be multiplied by 4 after this command.

For separating a toggle of state from the loading of data, another additional command can be implemented. The additional command is for example a load command called Lc. This command is sending the data to be loaded into the card. Typically, this command has the following structure:
Byte 1: 60 (command identifier)
Byte 2: most significant byte of @ Card
Byte 3: Least significant byte of @ Card
Byte 4: L
Bytes 5 to L-4 : data

@ Card corresponds to the address of the block in the memory of the card. L corresponds to the length of data in number of bytes.

Note that the data can possibly be encrypted and contain some checksum in order to ensure confidentiality or the integrity of the data. Here we have chosen a structure of command, but this structure can vary according to the needs of the implementation, for example, the length can be coded on more bytes, in order to be able to load bigger blocks, or can even be implicitly known by the reader and the cards.

In this invention, the memory is divided in blocks B1, B2...Bn. If a transmission error occurs during the transmission of one block, the error may put the card in an error state, which would result in a bad interpretation of all the following data. It can be useful therefore to power off the card after the loading of each block, then to power it on again and to send the Bc command again before loading the following block.

The advantage of this method is that we are always ready to receive the next block. Even in the worst error cases, the card is reset before the loading of each block. Then, the blocks are transmitted independently one from another, and an error in the transmission of one block Bₖ has no consequence on the downloading of the block Bₖ₊₁.

As indicated before, the blocks are preferably twice downloaded from the reader into each card. If a transmission error occurs before the writing of the data in the memory, it is still possible to try to load it again in the next occurrence of transmission of the block. If a block is already loaded in the memory during a second occurrence of loading, an error occurs and the block is not written again.

After the downloading of data to a plurality of card, it is necessary to check if each card has correctly received the data. Each card can be tested individually in another reader according the ISO mode 14443-3. The cards are verified one by one: in a first step, the portable set sends a checksum to the terminal. This checksum is calculated on all the blocks of data of the cards. Then, if this checksum is wrong, the checksum concerning the memory area regrouping the blocks B₁ to B_{n/2} is calculated on one side and the checksum concerning blocks B_{n/2+1} to Bₙ is calculated in the other side. The wrong checksum guide us to find in which area the error is. Then, using dichotomy, the bad block(s) is(are) found. Then the bad blocks can be loaded again either by using the ISO mode, or by resetting the wrong blocks in the memory and switching back to the Broadcast mode.

It appears that downloading error are not so important, around one percent. The test of the card can be performed by group of card. According to the invention, a second reader is used and is capable of working both in broadcasting mode and in the ISO mode. The number of cards in the second reader is determined by the probability to have at most a predetermined number of wrong cards.

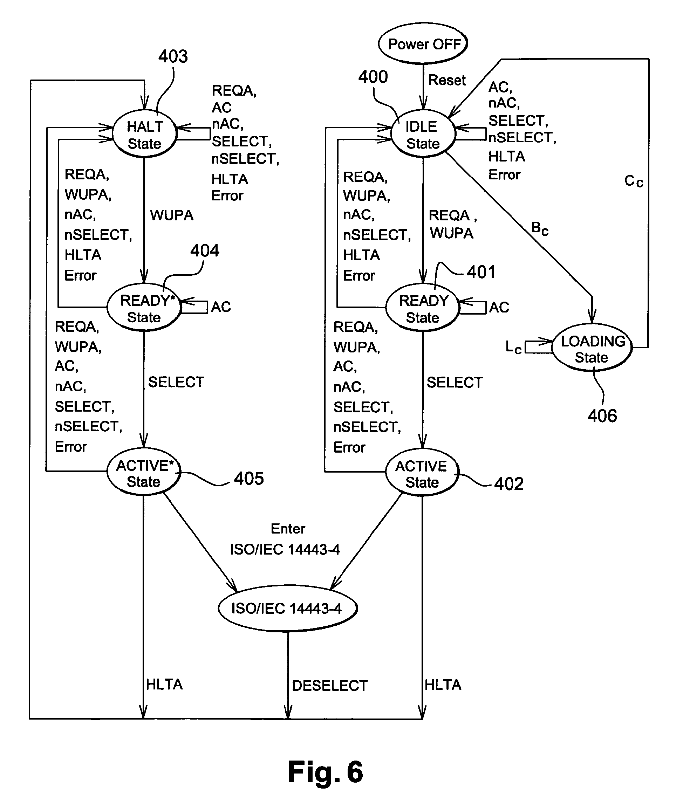

In this particular test mode, another command Cc is added. The Cc command makes the card pass from the Loading state 406 back to the Idle state 400, as shown in figure 6. The Cc command may launch an internal test of the downloaded data and so can be a simple command of only one byte:
- Byte 1: 70 (command identifier)

In case of detection of an error, the card return in the Idle state 400. If no error is detected, the card stays in the Loading state 406.

Another possibility is that the command contains a checksum calculated on the data previously downloaded. The Cc command can contains:
- Byte 1: 70 (command identifier)
- Byte 2: most significant byte of the checksum
- Byte 3: Least significant byte of the checksum

The command Cc can be defined the following way: on the reception of this command, the card calculates a checksum of its whole memory. If the checksum calculated by the card is not corresponding to the checksum given by the command, then it means that a loading error has occurred. Then, the command puts the card in the Idle State only if the checksum is wrong some error has occurred.

Whatever the implemented Cc command, the erroneous card(s) can be then selected according to the ISO 14443-3 protocol and a correct writing can be performed individually only for the erroneous card(s). In the most number of cases at most one card may be wrongly downloaded. But it is still possible to do it with several cards wrongly downloaded in the same group because ISO 14443-3 may manage individual communication with up to 15 cards. And only the wrong cards can be selected, the good cards staying in the loading state. Once wrong cards are in the Idle state, we may just identify them and through them away, or we may reload them individually. This command is not necessary but enable a fast monitoring of the downloading preventing an individual testing of all cards.

With such a method, considering a reliability of one percent for the downloading and the double transmission of each block, it is possible to download data simultaneously data to 500 cards in twice the time of the downloading of data in a single card. In addition, five cards may be erroneous and should be individually downloaded. The total time for the correct downloading of data into 500 cards corresponds to seven times the time necessary for downloading data according prior art. In fact some additional delays are added but the effective saving of time is more than 95%.

According to an improvement of the invention, the commands Bc, Lc and Cc can be disabled. This disabling prevents a downloading made accidentally or intentionally during the lifetime of the card. In thus, after the disabling of these commands, the card is fully compliant with ISO 14443 protocol after the downloading step. The disabling can be made by the setting of a non-volatile flag by means of a conventional sequence of command for addressing a non-volatile flag.

Other embodiments of the invention are possible without departing of the invention as defined in the set of claims. The Bc command may not be sent as the first command from the Idle state 400, but may also be sent after the REQA command from the Ready state 401.

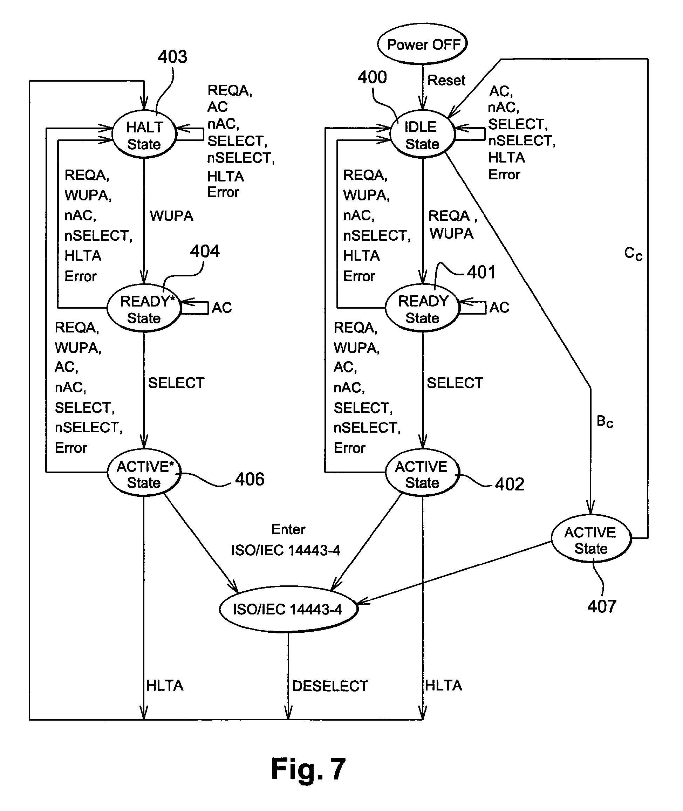

It is also possible to implement the broadcast mode with less modification from ISO standard. An alternative embodiment is shown on figure 7 wherein the download of data is made according to protocol ISO 14443-4. In this embodiment, the Bc command is used only for placing all cards in an Active state 407 wherein all cards are set active with a same identifier CID. All cards can be selected simultaneously by the command according to 14443-4. In this embodiment, the downloading is made with the commands of the prior art. A difference is that the reader introduces delay in the sending of commands for giving time to the cards for answering according ISO 14443-4. But the reader does not take into account the answer of the cards and continues the sending of commands considering that the receiving is always correct for the cards. The reader ignores the message coming from the portable devices.

In this embodiment, the reader cut the power supply field of the cards between each data block to be sure that a block can be downloaded even if an error occurs in the transmission of the previous block. The set of commands of ISO 14443-4 can offer more flexibility in the downloading. At the end of the broadcasted downloading, a check of data is performed card by card as explained before.

In addition, other embodiments are possible. As an example, the described embodiments make reference to type A cards of the ISO protocol. It is also possible to adapt type B cards according to the invention. It is also possible to adapt the invention to another protocol or to include the invention in another protocol.

## Claims

1. A manufacturing machine for loading data into portable devices, said machine comprising :
- processing means (1 to 4) for preparing data to load into portable devices (100, 101) and transforming said data in an electric signal carrying said data,
- an antenna (5 to 7) connected to the processing means for transforming the electric signal into an electromagnetic radiation in a loading area, wherein the loading area is capable of receiving at least two portable devices (100, 101).

2. The machine of claim 1, wherein the loading area is large enough for receiving up to 500 portable devices that can be loaded simultaneously.

3. The machine of claim 1 or 2, wherein the antenna is a flat coil (5), and wherein the loading area corresponds to the section surface of said flat coil.

4. The machine of claim 1 or 2, wherein the antenna is constituted of at least one coil (6) comprising a core (7), said core including an air-gap (8), and wherein the loading area corresponds to the volume defined by the air-gap.

5. The machine of one of the claims 1 to 4, said machine further comprising an electromagnetic shield (9) of Faraday type surrounding the antenna (6, 7) and the loading area.

6. The machine of one of the claims 1 to 5, wherein said portable devices are smart cards (100).

7. The machine of claim 6, wherein the loading area receives at least one stack of cards (101).

8. The machine of claim 7, wherein the cards of a same stack are slightly shifted from one to each other.

9. The machine of one of the claims 1 to 8, wherein said machine comprises only one way communication means (4) for sending commands and information from said machine to said portable devices.

10. A method for loading data from a reader into a memory of portable devices, said method comprising the steps of:
- placing at least two portable devices into a single loading area,
- preparing the data to load into portable devices and transforming said data into an electromagnetic radiation,
- sending simultaneously to the at least two portable devices the electromagnetic radiation for loading simultaneously the data in said portable devices.

11. The method of claim 10, wherein the step of preparing the data comprises a step of forming successive blocks of data that can be load individually block by block.

12. The method of claim 10 or 11, wherein, before the sending of each block of data, the reader switches off and then switches on the field that supplies power to the cards.

13. The method according to one of the claims 10 to 12, wherein the reader ignores the message coming from the portable devices.

14. The method according to one of the claims 10 to 13, wherein each data is sent at least twice to each portable device.

15. The method according to one of the claims 10 to 14, wherein portable devices are smart cards.

16. The method according one of the claims 10 to 15, wherein before the sending of data to the portable devices, the reader sends a command (Bc) for placing said portable devices in a broadcasting mode in which all portable devices are simultaneously activated for receiving commands and data.

17. The method according one of the claims 10 to 16, wherein after the downloading of all data, a command (Cc) is sent for triggering an auto-test in each card on the downloaded data, said command placing all erroneous cards in a functioning mode different from the functioning mode of the correctly downloaded cards.

18. The method according claims 16 and 17, wherein the command for triggering the auto test is launched in the broadcasting mode and the erroneous cards returns in a non-broadcasting mode for being individually selected.

19. The method according to one of the claims 16 to 18, wherein after the downloading of all data and eventually after the testing of data, a non-volatile flag of the device is set for definitely disabling the commands related to the broadcasted mode.

20. A smart card supporting a wireless communication protocol wherein said smart card supports commands corresponding to claims 16 to 19.
